**Europäisches Patentamt**

**European Patent Office**

**Office européen des brevets**

(19)

(11) Veröffentlichungsnummer: **0 313 779 B1**

# (12) EUROPÄISCHE PATENTSCHRIFT

(45) Veröffentlichungstag der Patentschrift:
21.08.91 Patentblatt 91/34

(51) Int. Cl.⁵: **B60Q 1/04**

(21) Anmeldenummer: **88114820.9**

(22) Anmeldetag: **09.09.88**

(54) **Scheinwerfer für Fahrzeuge, insbesondere für Kraftfahrzeuge.**

(30) Priorität: **30.10.87 DE 8714461 U**

(43) Veröffentlichungstag der Anmeldung:
**03.05.89 Patentblatt 89/18**

(45) Bekanntmachung des Hinweises auf die
Patenterteilung:
**21.08.91 Patentblatt 91/34**

(84) Benannte Vertragsstaaten:
**DE FR GB IT**

(56) Entgegenhaltungen:
**DE-A- 3 314 484**
**DE-A- 3 602 263**
**DE-U- 8 420 217**
**FR-A- 2 463 311**
**FR-A- 2 543 894**
**FR-A- 2 591 967**

(73) Patentinhaber: **ROBERT BOSCH GmbH**
**Postfach 10 60 50**
**W-7000 Stuttgart 10 (DE)**

(72) Erfinder: **Dobler, Karl-Otto**
**Lahnstrasse 5**
**W-7410 Reutlingen 25 (DE)**
Erfinder: **Daumüller, Hans**
**Carl-Benz-Strasse 21**
**W-7454 Bodelshausen (DE)**
Erfinder: **Merkl, Ernst**
**Solitudestrasse 70**
**W-7000 Stuttgart 31 (DE)**
Erfinder: **Remus, Bodo**
**Rheinstrasse70**
**W-7410 Reutlingen 25 (DE)**

## Beschreibung

### Stand der Technik

Die Erfindung betrifft einen Scheinwerfer für Fahrzeuge nach der Gattung des Anspruchs 1, wie er aus DE-A-3509831 bekannt ist. Dort ist ein Reflektor an mehreren Lagern festgelegt und mit einer oder mehreren Einstelleinrichtungen versehen. Eine dieser Einstelleinrichtungen hat eine von der Rückseite des Scheinwerfergehäuses betätigbare Einstellschraube mit einem Kugelzapfen, der in einer Kugelpfanne nach Art eines Kugelzapfenlagers festliegt. Diese Kugelpfanne ist in einem Teil angeordnet, das mit dem Reflektor verbunden ist und zwei Widerhaken hat, die seitlich an der Kugelpfanne angebracht sind und die den Kugelzapfen nach dem Eindrücken in die Kugelpfanne arretieren. Problematisch ist bei dieser Einrichtung das Lösen des Kugelzapfens aus der Kugelpfanne, da dies nur durch Beeinträchtigen der Widerhaken möglich ist.

Bei einer solchermaßen gebildeten Rastanordnung wird die Einstellschraube durch ein elastisches Kunststoffteil geschraubt, das in einer Öffnung des Gehäuses von dessen Fahrzeugseite her einsteckbar ist und dabei zum einen sich mittels einer Pratze an einer Außenschulter des Scheinwerfers abstützt und durch einen Haken hinter einer Innenschulter des Scheinwerfers einrastet. Die Einstellschraube besteht aus einem Metallteil mit Kugelzapfen und Gewindeschaft und dem aus Kunststoff hergestellten Handrad, das auf das Metallteil aufgebracht ist. Die Einstellschraube ist fertigungstechnisch schwierig herzustellen und das Metallteil muß mit dem Handrad noch verbunden werden.

Bei dieser bekannten Reflektoreinstelleinrichtung ist also die Herstellung sehr aufwendig und erfordert ein Zusammenfügen von vielen Teilen. Bei Einstelleinrichtungen mit und ohne Leuchtweitenregelung müssen verschiedene Befestigungshalter eingesetzt werden. Der einmal eingesetzte Kugelzapfen ist nicht lösbar ohne Beeinträchtigung der Kugelpfanne. Die Abdichtung der Einstellschraube ergibt einige Probleme.

### Vorteile der Erfindung

Mit der Einstelleinrichtung des Reflektors für Scheinwerfer gemäß der Erfindung wird das im vorerwähnten Stand der Technik dargelegte Problem in technisch einfacher Weise gelöst. Der Erfindung liegt der Gedanke zugrunde, eine einfache, praktikable und lösbare Rasteinrichtung zu schaffen.

Anspruch 1 zeigt eine mittels Sicherungshebel leicht arretierbar- und lösbare Rasteinrichtung, die auch eine Verwendung bei Scheinwerfereinstellungen mit und ohne Leuchtweiteregelung erlaubt. Beide Ausführungsformen mit und ohne Leuchtweitenregelung, können im gleichen Montageprozeß eingebaut und gefertigt werden. Mit der Erfindung wird eine fertigungstechnisch einfach herzustellende Kunststofffeinstellschraube vorgestellt, bei der eine Vielzahl von Teilen eingespart sind.

Vorteilhafte Weiterbildungen der Erfindung sind in den Unteransprüchen beschrieben. Der Scheinwerfer nach Anspruch 2 zeigt eine Abdichtung der Einstellschraube, die beim Schraubvorgang in einer mit dem Scheinwerfergehäuse verbundenen als Zylinder ausgeführten Hülse verschiebbar ist.

### Zeichnung

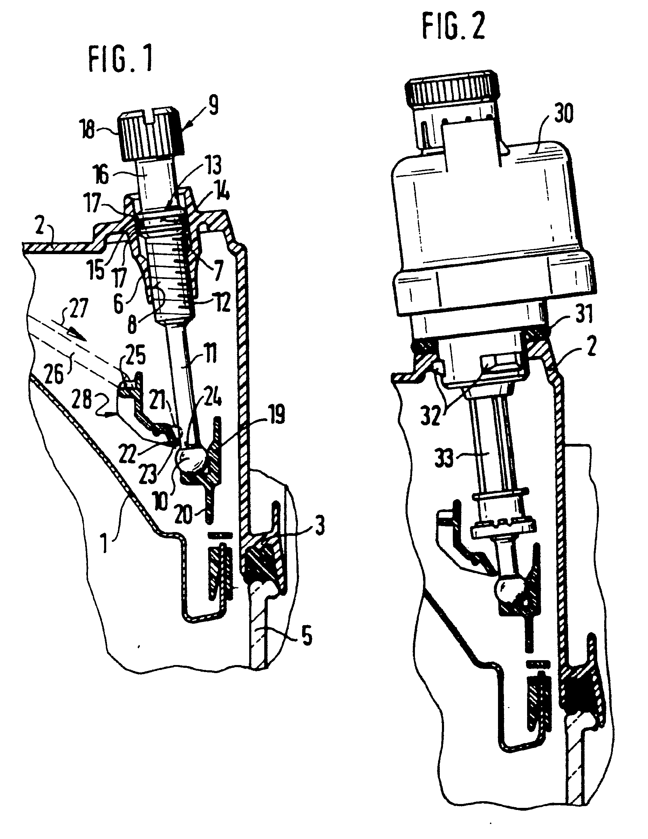

Ein Ausführungsbeispiel der Erfindung ist in der Zeichnung dargestellt und in der Figurenbeschreibung näher erläutert. Es zeigen : Figur 1 der Vertikalschnitt durch eine erfindungsgemäße Reflektor-Befestigungsanordnung ohne Leuchtweitenregelung ; Figur 2 den Vertikalschnitt durch eine Reflektor-Befestigungsanordnung mit Leuchtweitenregelung.

### Beschreibung der Ausführung

Ein Scheinwerfer in Figur 1 hat einen Reflektor 1, der eine nicht näher dargestellte Glühlampe trägt. Dieser Reflektor 1 ist in einem Scheinwerfergehäuse 2 untergebracht. Das Scheinwerfergehäuse 2 ist an seinem äußeren Umfang mit einer Ringnut 3 versehen, in die ein Klebesumpf eingespritzt ist und nach dem Eindrücken der Streuscheibe 5 eine feste Verbindung zwischen Scheinwerfergehäuse und Streuscheibe 5 hergestellt ist. Im zur Fahrzeugkarosserie weisenden Teil des Scheinwerfergehäuses 2 ist eine Hülse 6 angeordnet oder eingeformt. Die Hülse 6 hat einen nach außen, aus dem Scheinwerfergehäuse 2 ragenden paßgenauen Innenzylinder 7, dem sich Richtung Scheinwerfergehäuse-Innenseite in axialer Richtung ein Gewindeteil 8 anschließt. In das Gewindeteil 8 der Hülse 6 ist eine ganz aus Kunststoff hergestellte Kunststofffeinstellschraube 9 eingeschraubt. Die Kunststofffeinstellschraube 9 besteht aus einem Kugelzapfen 10, der nach Innen in das Scheinwerfergehäuse 2 weist. Dem Kugelzapfen 10 schließt sich ein zylindrischer Schaft 11 an, der im Durchmesser geringer ist als der Kugelzapfen 10. Nach dem Schaft 11 folgt ein Außengewindeteil 12, das im Durchmesser größer als der Kugelzapfen 10 ist. Dem Gewindeteil 12 schließt sich ein paßgenaues Zylinderteil 13 mit zwei Bundringen 17 an, das im Außendurchmesser größer als das Außengewindeteil 12 sind. Die Bundringe 17 des Zylinderteils 13 bilden eine Ringnut 14, in der ein Dichtring 15 eingelegt ist, der als Abdichtung im paßgenauen Zylinder 7 beim Drehen des Außengewindeteils 12 und damit dem Verschieben des Zylinderteils 13 dient. Nach dem Zylinderteil 13 folgt ein zylindrisches Zwischenstück 16, dem sich ein handradförmige Einstellknopf 18 anschließt, der einstückig an die Einstellschraube angeordnet ist. Beim Einschrauben der Kunststoffeinstellschraube 9 in die Hülse 6 wird der Kugelzapfen 10 an einem Sicherungshebel 28 vorbeigeführt und rastet dann in einer Kugelpfanne 19 ein. Die Kugelpfanne 19 ist in einem Befestigungshalter 20 angeordnet, der mit dem Reflektor 1 verbunden ist. Die Kunststoffeinstellschraube 9 mit dem in die Kugelpfanne 19 eingerasteten Kugelzapfen 10 bewegt, entsprechend der Einstellschraubendrehung, den Reflektor 1.

Die konkrete Lage und Halterung des Kugelzapfens 10 in der Kugelpfanne 19 erfolgt durch den Sicherungshebel 28. Der Sicherungshebel 28 ist um eine Achse 21 drehbar oder verwindbar. Diese Achse 21 ist so angeordnet, daß der Kugelzapfen 10 daran vorbeigeführt werden kann und in einen als Sperrklinke 22 ausgebildeten Teil des Sicherungshebels 28 einrastet. Die Sperrklinke 22 hat ein abgeflachtes Ende 23, das an einen an die Kugelzapfen angebrachten Bund 24 anliegt, der eine sichere maßgenaue Lage gewährleistet.

Die Sperrklinke 22 und der Bund 24 gewährleisten eine unverrückbare Lage des Kugelzapfens 10 in der Kugelpfanne 19 und damit eine immer exakte Einstellung des Reflektors 1.

Beim Austausch des Reflektors 1 oder der Kunststoffeinstellschraube 9 wird an einer im Sicherungshebel 28 angebrachten Vertiefung 25 ein Werkzeug 26 angesetzt und in Pfeilrichtung 27 gedrückt, dadurch springt die Rastklinke 22 vom Bund des Kugelzapfens 10 und gibt den Kugelzapfen 10 frei.

Figur 2 zeigt eine alternative Ausführung mit Leuchtweitenregelung. An einem Stellantrieb 30 liegt eine Dichtung 31 an und wird mittels eines Bajonettverschlusses 32 in dem Scheinwerfergehäuse 2 gehalten. Eine axial verschiebbare Welle 33 führt aus dem Stellantrieb 30 und hat eine bereits in der Ausführung der Figur 1 beschriebene Kugelzapfen/Kugelpfannenverbindung mit Sicherungshebel zur Regelung der Reflektoreinstellung.

## Patentansprüche

1. Scheinwerfer für Fahrzeuge mit einem eine Glühlampe aufnehmenden Reflektor (1), welcher Scheinwerfer durch mindestens zwei Lager an einem den Scheinwerfer aufnehmenden Gehäuse (2) festliegt und mit einem Lager am Scheinwerfer, das als Rastanordnung ausgebildet ist und aus einer Kugelpfanne (19) und in diese über Widerhaken einrastbaren an einer Einstellschraube (9) angebrachten Kugelzapfen (10) besteht, dadurch gekennzeichnet, daß die Einstellschraube (9) aus Kunststoff hergestellt und der Kugelzapfen (10) durch einen von außerhalb des den Scheinwerfer umgebenden Gehäuses (2) aus schwenkbaren Sicherungshebel (28) gesichert ist.

2. Scheinwerfer nach Anspruch 1, dadurch gekennzeichnet, daß die Kunststoffeinstellschraube (9) einen Schaft (11), ein Außengewindeteil (12), ein mit einer Ringnut (14) versehenes Teil aufweist, in welche Ringnut (14) ein Dichtelement (15) eingebracht ist, das mit einem Innenzylinder (7) an der Durchtrittsstelle der Kunststoffeinstellschraube (9) am Gehäuse (2) in dichter Verbindung steht.

3. Scheinwerfer nach Anspruch 2, dadurch gekennzeichnet, daß die Kugelpfanne (19) in ein Teil eingeformt ist, das mit dem Scheinwerfer verbunden ist.

4. Scheinwerfer nach Anspruch 3, dadurch gekennzeichnet, daß der Sicherungshebel (28) arretierbar oder federbelastet im Scheinwerfergehäuse (2) an einer Drehachse (21) gelagert ist und durch eine als Sperrklinke (22) ausgebildetes Teil des Sicherungshebels (28) an vorgesehener Eingriffsstelle (25) betätigbar ist.

## Claims

1. Headlamp for vehicles, having a reflector (1) accommodating an incandescent lamp, which headlamp is located by means of at least two bearings on a housing (2) accommodating the headlamp, and having a bearing on the headlamp which is constructed as a latching arrangement and consists of a ball cup (19) and ball journals (10) which can latch into said ball cup via barbs and are mounted on an adjusting screw (9), characterised in that the adjusting screw (9) is produced from plastic and the ball journal (10) is secured by a safety lever (28) which can be swivelled from outside the housing (2) surrounding the headlamp.

2. Headlamp according to Claim 1, characterised in that the plastic adjusting screw (9) has a shank (11), an externally threaded part (12), and a part provided with an annular groove (14), into which annular groove (14) a sealing element (15) is introduced, which is tightly connected to an inner cylinder (7) at the point of penetration of the plastic adjusting screw (9) on the housing (2).

3. Headlamp according to Claim 2, characterised in that the ball cup (13) is integrally formed in a part which is connected to the headlamp.

4. Headlamp according to Claim 3, characterised in that the safety lever (28) is mounted in the headlamp housing (2) in a lockable or spring-loaded fashion on an axis of rotation (21), and can be operated by a part, constructed as a catch (22), of the safety lever (28) at a point of engagement (25) provided.

## Revendications

1. Phare pour véhicules comprenant un réflecteur (1) recevant une lampe à incandescence, phare qui est immobilisé par au moins deux supports sur boîtier (2) recevant le phare, comprenant également un support sur le phare qui est réalisé comme dispositif de blocage et qui se compose d'une alvéole (19) et d'un pivot sphérique (10) encliquetable dans cette dernière par des barbes, fixé à une vis de réglage (9), caractérisé en ce que la vis de réglage (9) est réalisée en matière plastique et en ce que le pivot sphérique (10) est assuré par un levier de sécurité (28) pivotable à partir de l'extérieur du boîtier (2) entourant le phare.

2. Phare selon la revendication 1, caractérisée en ce que la vis de réglage en matière plastique (9) comporte une tige (11), une partie avec filetage extérieur (12), une partie munie d'une rainure (14), rainure dans laquelle est inséré un élément d'étanchéité (15) qui se trouve en liaison étanche avec un cylindre intérieur (7) à l'endroit de la pénétration de la vis de réglage (9) dans le boîtier (2).

3. Phare selon la revendication 2, caractérisé en ce que l'alvéole (19) est mise en place dans une partie, qui est liée au phare.

4. Phare selon la revendication 3, caractérisé en ce que le levier de sécurité (28) est logé fixable ou chargé par un ressort dans le boîtier du phare (2) sur un axe de rotation (2) et peut être actionné à l'endroit de prise prévu pour cela (25) avec effet sur la partie du levier de sécurité (28) réalisée comme cliquet d'arrêt (22).

## FIG. 1

## FIG. 2